(19) Europäisches Patentamt
European Patent Office
Office européen des brevets

(11) **EP 3 521 860 B1**

(12) **EUROPÄISCHE PATENTSCHRIFT**

(45) Veröffentlichungstag und Bekanntmachung des Hinweises auf die Patenterteilung:
**16.12.2020 Patentblatt 2020/51**

(51) Int Cl.:
**G01S 17/42** *(2006.01)*     **G01S 17/931** *(2020.01)*
**G01S 7/48** *(2006.01)*     **G01S 17/87** *(2020.01)*

(21) Anmeldenummer: **19151190.6**

(22) Anmeldetag: **10.01.2019**

(54) **OPTOELEKTRONISCHE SENSORVORRICHTUNG**

OPTO-ELECTRONIC SENSOR DEVICE

DISPOSITIF CAPTEUR OPTOÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2018 DE 102018102287**

(43) Veröffentlichungstag der Anmeldung:
**07.08.2019 Patentblatt 2019/32**

(73) Patentinhaber: **SICK AG**
**79183 Waldkirch (DE)**

(72) Erfinder:
• **Brencher, Tim**
**24782 Büdelsdorf (DE)**
• **Baumgartner, Carolin**
**79279 Müllheim (DE)**
• **Krzikalla, Roland**
**21244 Buchholz i.d.N. (DE)**
• **Tsakiris, Matthias**
**22119 Hamburg (DE)**
• **Ahrholdt, Malte**
**22844 Norderstedt (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 2 192 384     DE-A1-102013 207 147**
**US-B1- 7 741 961**

## Beschreibung

Die vorliegende Erfindung betrifft eine optoelektronische Sensorvorrichtung gemäß dem Oberbegriff des Anspruchs 1 sowie ein Verfahren zum Betrieb solch einer optoelektronischen Sensorvorrichtung gemäß dem Oberbegriff des Anspruchs 15 mit einem auf einen Boden ausgerichteten Mehrlagen-Laserscanner, welcher Abstandsinformationen für zumindest einen Überwachungsbereich ermittelt, wobei der zumindest eine Überwachungsbereich einen Bodenbereich abdeckt, der einen Oberflächenbereich des Bodens bildet.

Solche optoelektronischen Sensorvorrichtungen finden Verwendung in vielfältigen Anwendungen. Beispielsweise können sie stationär angebracht sein und zur Überwachung eines Schutzraumes einer gefahrenträchtigen Maschine dienen. Dabei können mittels des ersten Überwachungsbereichs z.B. die Beine von Personen detektiert werden. Wird auf diese Weise die Anwesenheit einer Person oder eines Gegenstandes im Schutzraum von der Sensorvorrichtung erkannt, so kann die Maschine abgeschaltet werden, um die Person nicht zu gefährden.

Außerdem können optoelektronische Sensorvorrichtungen auch für mobile Anwendungen eingesetzt werden, insbesondere können sie einen Betrieb von Fahrzeugen und selbstfahrenden Fahrzeugen ermöglichen. Selbstfahrende Fahrzeuge, auch AGVs (Automated Guided Vehicle) genannt, werden z.B. zum automatischen Transport von Gegenständen eingesetzt, beispielsweise in automatisierten Fertigungsbetrieben. Um eine Kollision mit Objekten (d.h. Hindernissen oder Personen) zu vermeiden, wird üblicherweise ein an dem Fahrzeug angebrachter Laserscanner der Sensorvorrichtung verwendet, der in etwa 15 bis 30 cm Höhe über dem Boden angebracht ist und z.B. einen in Fahrtrichtung des Fahrzeugs ausgerichteten Überwachungsbereich abtastet. Der Laserscanner kann insbesondere ein Abstandssensor sein, dessen Überwachungsbereich sich parallel zu dem Boden erstreckt und eine ebene Fläche definiert. Durch die zum Boden beabstandete Montage des Abstandssensors kann eine fälschliche Erfassung des Bodens als Hindernis während Nickbewegungen des Fahrzeugs beim Beschleunigen bzw. Bremsen oder beim Überfahren von Unebenheiten vermieden werden. Durch diese Anordnung des Abstandssensors werden jedoch sowohl bei stationärem, als auch bei einem mobilen Einsatz der Sensorvorrichtung flache Hindernisse nicht erkannt. D.h. Hindernisse, die niedriger als der Abstand eines parallel zum Boden verlaufenden Überwachungsbereichs bzw. des Abstandssensors von dem Boden sind, werden nicht erfasst. Bei einem Zusammenstoß z.B. eines selbstfahrenden Fahrzeugs mit solchen Hindernissen kann es zu Beschädigungen des Fahrzeugs und des Hindernisses kommen. Zudem kann insbesondere bei der Verwendung von selbstfahrenden Fahrzeugen in Krankenhäusern auch ein Verletzungsrisiko bestehen. Auch bei der stationären Verwendung der Sensorvorrichtung kann eine nicht erfolgte Erkennung von Objekten zu Sicherheitsrisiken führen.

Ein weiteres Problem bekannter optoelektronischer Sensorvorrichtungen insbesondere für mobile Anwendungen besteht darin, dass in einigen Fällen nicht nur Objekte erkannt werden müssen, sondern auch ganz allgemein Hindernisse, die nicht befahrbar sind. Solche Hindernisse können z.B. Stufen, Absätze oder Vertiefungen in dem Boden sein, die von einem Fahrzeug in der Regel nicht befahren werden und deswegen als Hindernisse erfasst werden sollen. Mit anderen Worten müssen auch Hindernisse erkannt werden, die durch einen "fehlenden Boden", d.h. durch eine relevante Abweichung von einem "normalen Boden" charakterisierbar sind. Es müssen also allgemein Bodenanomalien erfasst werden.

Eine vollständige Erfassung von Hindernissen jeglicher Art ließe sich durch eine erweiterte Sensorik erzielen, z.B. indem neben dem Abstandssensor noch weitere optische Sensoren, z.B. eine Kamera, vorgesehen werden, um die Umgebung der Sensorvorrichtung im Wesentlichen vollständig dreidimensional zu erfassen. Eine derartige Erweiterung der Sensorik ist jedoch aufgrund von Restriktionen nicht immer möglich, z.B. wegen der hiermit verbundenen Mehrkosten.

Aus der US 7 741 961 B1 geht eine im Wesentlichen gattungsgemäß ausgebildete optoelektronische Sensorvorrichtung hervor. Technologischer Hintergrund zum Stand der Technik ist in DE 10 2013 207147 A1 und EP 2 192 384 A1 beschrieben.

Es ist daher die der Erfindung zugrundeliegende Aufgabe, eine optoelektronische Sensorvorrichtung anzugeben, welches auch flache Objekte und Bodenanomalien detektieren kann, wobei die Detektion auf möglichst einfache und kostengünstige Weise erfolgen soll.

Die Aufgabe wird gelöst durch eine optoelektronische Sensorvorrichtung gemäß Anspruch 1 sowie durch ein Verfahren mit den Merkmalen des Anspruchs 15.

Die optoelektronische Sensorvorrichtung gemäß Anspruch 1 weist einen auf den Boden ausgerichteten Abstandssensor in Form eines Laserscanners auf, welcher Abstandsinformationen für zumindest einen Überwachungsbereich ermittelt, wobei der zumindest eine Überwachungsbereich einen Bodenbereich abdeckt, der einen Oberflächenbereich des Bodens bildet. Ferner weist die Sensorvorrichtung eine Auswerteeinheit auf, die ausgebildet ist, anhand der Abstandsinformationen eine Abweichung von zumindest einem erwarteten Bodenbereich zu erkennen, und bei Erkennung einer Abweichung ein Signal, insbesondere ein Warnsignal auszugeben. Der zumindest eine erwartete Bodenbereich beruht auf einem vordefinierten Modell, welches die Abstandsinformationen für den zumindest einen Überwachungsbereich für den theoretischen Fall repräsentiert, in dem sich der Abstandssensor in einer bekannten Referenzlage befindet und auf einen bekannten Referenzboden ausgerichtet ist.

Aufgrund der Ausrichtung des Abstandssensors auf den Boden wird erreicht, dass der Überwachungsbereich den Boden teilweise abdeckt, d.h. einen Oberflächenbereich des Bodens umfasst. Der Überwachungsbereich verläuft somit zumindest abschnittsweise nicht parallel sondern schräg zu dem Boden, sodass der Überwachungsbereich den Boden im geometrischen Sinne schneidet. Der Überwachungsbereich verläuft somit ausgehend vom Abstandssensor geneigt in Richtung hin zu dem Boden und schneidet den Boden in einem bestimmten Bodenbereich, der aufgrund der Geometrie des Überwachungsbereichs und des Bodens dem Überwachungsbereich zugeordnet werden kann. Auf diese Weise ist sichergestellt, dass der Abstandssensor den Boden stets "im Blick hat" und insbesondere auch flache Objekte auf dem Boden sowie Bodenanomalien erkennen kann. Vorzugsweise sind mehrere Überwachungsbereiche vorgesehen, die jeweils einen zugeordneten Bodenbereich abdecken.

Die Erkennung von Objekten und Bodenanomalien erfolgt anhand der Abstandsinformationen, die in Abhängigkeit von zumindest einem erwarteten Bodenbereich ausgewertet werden. Im Falle mehrerer Bodenbereiche ist vorzugsweise für jeden abgedeckten Bodenbereich ein zugeordneter erwarteter Bodenbereich vorgesehen. Ein jeweiliger erwarteter Bodenbereich gibt den Bodenbereich an, den die Vorrichtung bezüglich der ermittelten Abstandsinformationen erwarten würde, wenn kein Objekt und auch keine Bodenanomalie vorhanden ist. Somit repräsentiert der erwartete Bodenbereich einen Normbereich, der dazu dient, festzustellen, ob sich ein Objekt und/oder eine Bodenanomalie in dem betreffenden Überwachungsbereich befindet.

Der erwartete Bodenbereich kann durch eine oder mehrere Abstandsgrenzwerte definiert sein, um einen Bereich von Abstandswerten zwischen dem Abstandssensor und dem Boden anzugeben. Wenn die für den aktuell abgedeckten Bodenbereich ermittelten Abstandsinformationen innerhalb des Bereichs von Abstandswerten liegen, kann davon ausgegangen werden, dass sich kein Objekt und keine Bodenanomalie in dem Überwachungsbereich befinden. Der erwartete Bodenbereich kann räumlich variabel ausgebildet sein und durch ein oder mehrere geometrisch interpretierbare Parameter definiert sein. Solche Parameter können insbesondere Abstandswerte bezüglich der von dem Abstandssensor ermittelten Abstandsinformationen, aber auch andere Parameter sein, etwa zur Beschreibung einer Kontur im Raum.

Im Betrieb der Sensorvorrichtung tastet der Abstandssensor vorzugsweise einen linienförmigen Bodenbereich bevorzugt optisch ab und liefert für die abgetastete Linie Abstands- also Tiefeninformationen. Hierzu ist der Abstandssensor bevorzugt als Laserscanner mit einem drehbaren Scankopf ausgebildet, der Abstandsinformationen über eine Lichtlaufzeitmessung von von dem Abstandssensor selbst ausgesandten Laserpulsen ermittelt. Beispielsweise wird in periodischen Abständen ein Laserpuls ausgesandt, der einen Abstandspunkt für eine zugeordnete Drehstellung des Scankopfs liefert. Für jeden der auf diese Weise ermittelten Abstandspunkte kann festgestellt werden, ob der zugehörige Abstandswert innerhalb des erwarteten Bodenbereichs liegt. Hierfür kann für jede betreffende Drehstellung des Scankopfs ein zugehöriger oberer und unterer Abstandsgrenzwert gespeichert sein, der mit dem Abstand des für die betreffende Drehstellung ermittelten Abstandspunkts verglichen wird. Wenn der gemessene Abstand den oberen Abstandswert nicht überschreitet und den unteren Abstandsgrenzwert nicht unterschreitet kann der betreffende Abstandspunkt dem erwarteten Bodenbereich zugeordnet werden. D.h. es wird davon ausgegangen, dass der Laserpuls zur Messung des Abstandspunkts auf den Boden getroffen ist und nicht auf ein Objekt oder eine Bodenanomalie. Sollte der gemessene Abstand einen der Abstandsgrenzwerte verletzen, ist dies ein Hinweis auf ein Objekt oder eine Bodenanomalie, wobei z.B. im Falle zu kleiner Abstände auf ein Objekt und im Falle zu großer Abstände auf eine Bodenanomalie geschlossen werden kann.

Der erwartete Bodenbereich beruht auf einem vordefinierten Modell, welches die Abstandsinformationen für den zumindest einen Überwachungsbereich für den theoretischen Fall repräsentiert, in dem sich der Abstandssensor in einer bekannten Referenzlage befindet und auf einen bekannten Referenzboden ausgerichtet ist. Das vordefinierte Modell basiert also auf a-priori Wissen, insbesondere über einen Montagewinkel und/oder eine Montageposition des Abstandssensors. Mit anderen Worten repräsentiert der erwartete Bodenbereich eine modellbasierte Referenz zur Erkennung von Objekten und Bodenanomalien. Allerdings müssen die ermittelten Abstandsinformationen vorzugsweise nicht exakt mit dem vordefinierten Modell übereinstimmen, um ein Objekt oder eine Bodenanomalie auszuschließen. Der erwartete Bodenbereich kann vielmehr einen Toleranzbereich darstellen, der für eine höhere Zuverlässigkeit bei der Erkennung sorgt. Hierzu kann der auf der Grundlage des Modells definierte erwartete Bodenbereich adaptiert werden, wie nachfolgend noch genauer erläutert wird.

Die Referenzlage des Abstandssensors umfasst vorzugsweise die räumliche Position des Abstandssensors und dessen Ausrichtung relativ zum Boden. Die Ausrichtung kann zumindest einen Neigungswinkel des Abstandssensors relativ zu dem Boden umfassen. Aus dem Neigungswinkel kann der Verlauf des Überwachungsbereichs relativ zum Abstandssensor und dem Boden angegeben werden. Die räumliche Position des Abstandssensors kann insbesondere ausschließlich die Distanz des Abstandssensors vom Referenzboden umfassen, d.h. die Referenzhöhe des Abstandssensors. Der Referenzboden kann allgemein eine mathematische Funktion und durch Parameter definiert sein, die die räumliche Position und den Verlauf des Referenzbodens angeben. Vorzugsweise sind die Referenzlage des Abstandssensors und der Referenzboden relativ zueinander definiert, d.h. absolute Positionsangaben sind nicht notwendig. Anhand der Referenzlage und des Referenzbodens kann insbesondere auf rein geometrischem Wege ermittelt werden, wo der (Referenz-) Überwachungsbereich den Referenzboden schneidet. Hieraus kann vorteilhaft der erwartete Bodenbereich bestimmt werden. Der erwartete Bodenbereich beruht also auf einer geometrischen Anordnung des Abstandssensors relativ zu einem Referenzboden. Diese Anordnung muss nicht in einem tatsächlichen Betrieb der Sensorvorrichtung erzielt werden, sondern spiegelt einen mathematisch definierten Idealfall (theoretischer Fall) wider. Hierdurch kann das vordefinierte bzw. deterministische Modell der Sensorvorrichtung vergleichsweise einfach parametriert sein. Dies erlaubt unter anderem eine besonders einfache Anpassung des Modells an eine konkrete Sensorvorrichtung, indem z.B. lediglich ein oder mehrere Parameter des Modells geändert werden. Der Einsatz eines derartigen vordefinierten Modells hat somit Vorteile gegenüber anderen Modellen, insbesondere solchen, die erst im tatsächlichen Betrieb einer Sensorvorrichtung aufwändig ermittelt bzw. trainiert oder initialisiert werden müssen. Insbesondere ist es im Hinblick auf das vordefinierte Modell nicht notwendig, dass Abstandsinformationen für einen tatsächlich vorhandenen "Referenzboden" ermittelt werden. Stattdessen kann der Referenzboden z.B. eine Ebene sein, die ausschließlich virtuell existiert und durch geometrische Parameter sauber definiert ist. Unter Hinzunahme des von dem in der Referenzlage positionierten Abstandssensors ausgehenden Überwachungsbereichs kann der erwartete Bodenbereich somit völlig autark von unter Umständen fehlerbehafteten Messinstrumenten ermittelt werden. Hierdurch wird die zuverlässige Erkennung insbesondere von flachen Objekten und Bodenanomalien gesteigert.

Der Begriff "Boden" kann insbesondere einen Untergrund beliebiger Beschaffenheit bezeichnen. Vorzugsweise ist der Boden in geometrischer Hinsicht zumindest ähnlich zu einem ebenen Boden, etwa eines Gebäudes. Allgemein kann der Boden auch eine Wand oder Decke eines Gebäudes sein, das überwacht werden soll.

Bei dem ausgegebenen Signal kann es sich beispielsweise um ein Benachrichtigungssignal, ein Brems- und/oder um ein Ausweichsignal handeln. Das Signal kann beispielsweise ein Brems- und/oder Ausweichmanöver initiieren. Vorteilhafte Ausführungsformen sind in den abhängigen Ansprüchen, der Beschreibung und den Zeichnungen angegeben.

Im Lichte der vorstehenden Erläuterung der Erfindung kann das vordefinierte Modell der Sensorvorrichtung insbesondere ein geometrisches Modell sein, das nicht von Abstandsinformationen abhängig ist, die von dem Abstandssensor in einem tatsächlichen Betrieb der optoelektronischen Sensorvorrichtung ermittelt werden. Durch das geometrische Modell ist es möglich, den erwarteten Bodenbereich z.B. durch nur zwei definierte Punkte und die Information zu definieren, dass der erwartete Bodenbereich eine Gerade oder eine Linie umfasst, die durch die zwei definierten Punkte verläuft. Die Gerade oder die Linie kann noch von dem bereits erwähnten Toleranzbereich umgeben sein, wobei der Toleranzbereich ebenfalls zum erwarteten Bodenbereich zählt. Die Linie kann auch die Form einer Hyperbel aufweisen, insbesondere dann, wenn ein Verkippungswinkel vorliegt, wie später beschrieben. Das vordefinierte Modell bzw. der erwartete Bodenbereich können somit auf einfache Weise mathematisch oder geometrisch beschrieben werden. Auf diese Weise kann das Modell ohne Weiteres in der optoelektronischen Vorrichtung eingespeichert werden, wobei ein potentiell fehlerbehafteter Trainingsbetrieb der Vorrichtung zur Ermittlung des Modells nicht notwendig ist. Vielmehr kann das vordefinierte Modell durch ein oder mehrere feste Parameter definiert sein, die gesondert angepasst werden können, z.B. um die Referenzlage des Abstandsensors oder eine hiervon abgeleitete Größe festzulegen. Die Referenzlage ist vorzugsweise eine für den Betrieb der Sensorvorrichtung vorgesehene Lage des Abstandssensors.

Nach einer bevorzugten Ausführungsform schließen der zumindest eine Überwachungsbereich und der Boden einen Winkel ein, der kleiner vierzig, vorzugsweise kleiner dreißig Grad ist. Der Abstandssensor kann hierzu vorzugsweise in geringer Höhe oberhalb des Bodens positioniert und derart ausgerichtet sein, dass der

Überwachungsbereich im gewünschten Winkel relativ zum Boden verläuft. Es versteht sich, dass der Winkel zwischen dem Überwachungsbereich und dem Boden abschnittsweise variabel sein kann, z.B. wenn der Überwachungsbereich einen räumlich gekrümmten Verlauf besitzt. Ein kleiner bzw. "flacher" Winkel zwischen dem Überwachungsbereich und dem Boden besitzt den Vorteil, dass sich die ermittelten Abstandsinformationen relativ zu der Höhe eines flachen Objekts stark verändern, wenn das flache Objekt in den Überwachungsbereich eindringt. Somit können flache Objekte und aus demselben Grund auch Bodenanomalien besonders zuverlässig erkannt werden.

Nach einer weiteren Ausführungsform umfasst das Modell zumindest eine Referenzabstandskontur, die auf der Referenzlage und dem Referenzboden beruht, wobei der zumindest eine erwartete Bodenbereich einen Toleranzbereich um die zumindest eine Referenzabstandskontur bildet. Mit anderen Worten stellt der erwartete Bodenbereich vorzugsweise einen Toleranzbereich um die Referenzabstandskontur dar, die theoretisch mit den ermittelten Abständen übereinstimmen würde, wenn der Abstandssensor sich in der Referenzlage befinden würde und somit auf den Referenzboden ausgerichtete wäre. Da diese Idealbedingungen im tatsächlichen Betrieb jedoch in der Regel nicht exakt zutreffen, wird der Erkennung von Objekten ein Toleranzbereich zugrunde gelegt, d.h. die ermittelten Abstände dürfen etwas größer oder kleiner sein, wobei vorzugsweise kein Objekt und keine Bodenanomalie erkannt wird, wenn die Abstände noch innerhalb des erwarteten Bodenbereichs liegen. Der erwartete Bodenbereich kann insbesondere ausschließlich auf der Referenzabstandskontur basieren. Dies kann insbesondere dann sinnvoll sein, wenn z.B. in einem stationären Betrieb der Sensorvorrichtung keine größeren Abweichungen von den Referenzannahmen zu erwarten sind und daher auf eine Anpassung des erwarteten Bodenbereichs auf der Grundlage aktueller Messdaten verzichtet werden kann. Der erwartete Bodenbereich kann jedoch insbesondere bei Verwendung der Sensorvorrichtung in einer nicht-stationären, d.h. mobilen Anwendung (z.B. in einem Fahrzeug) auch dynamisch angepasst werden, wie nachfolgend erläutert wird.

Der Referenzboden kann insbesondere durch eine ebene Fläche definiert sein. Allgemein kann der Referenzboden jedoch durch eine beliebige Fläche definiert sein, die vorzugsweise zumindest in etwa dem Boden entspricht, der im Betrieb der Sensorvorrichtung von dem Abstandssensor bereichsweise abgedeckt werden soll. Ebenso kann die Referenzlage des Abstandssensors zumindest im Wesentlichen der für den tatsächlichen Betrieb der Sensorvorrichtung vorgesehenen Betriebsposition entsprechen.

Vorzugsweise umfasst der zumindest eine Überwachungsbereich eine ebene und/oder gekrümmte Fläche, die sich zumindest teilweise mit dem Referenzboden schneidet, wobei die Schnittlinie zwischen der Fläche und dem Referenzboden die zumindest eine Referenzabstandskontur bildet. Im Falle mehrerer Überwachungsbereiche können für jeden Überwachungsbereich je ein erwarteter Bodenbereich und eine Referenzabstandskontur vorgesehen sein, die sich aus einer jeweiligen Schnittlinie des zugeordneten Überwachungsbereichs ergibt. Die Referenzabstandskonturen können ebenso wie die Überwachungsbereiche unterschiedlich ausgebildet sein. Hierdurch können z.B. für eine betreffende Anwendung spezifische Muster von Überwachungsbereichen entworfen werden, um die Erkennungsleistung der Sensorvorrichtung zu optimieren.

Wenn mehrere Überwachungsbereiche vorgesehen sind, können die den Überwachungsbereichen zugeordneten erwarteten Bodenbereiche alle auf demselben vordefinierten Modell beruhen, wobei hierfür vorzugsweise bekannte sensorspezifische Informationen herangezogen werden, welche eine feste Beziehung zwischen den Überwachungsbereichen angeben, die sich im Betrieb der Sensorvorrichtung nicht ändert.

Nach einer weiteren Ausführungsform ist die Auswerteeinheit dazu ausgebildet, den zumindest einen erwarteten Bodenbereich auf der Grundlage des vordefinierten Modells zu bestimmen, insbesondere auf der Grundlage einer zugeordneten Referenzabstandskontur. Diese kann bzw. können ebenfalls von der Auswerteeinheit ermittelt werden, insbesondere (einmalig) im Rahmen einer Initialisierung der Sensorvorrichtung. Alternativ zu einer Ermittlung des erwarteten Bodenbereichs, kann dieser auch in der Sensorvorrichtung z.B. im Sinne einer "Werkseinstellung" gespeichert sein.

Gemäß einer bevorzugten Ausführungsform ist die Auswerteeinheit dazu ausgebildet, den zumindest einen erwarteten Bodenbereich in Abhängigkeit von aktuell ermittelten Abstandsinformationen anzupassen. Eine derartige Anpassung des Bodenbereichs, die wegen der Berücksichtigung aktueller Abstandsinformationen als adaptiv bezeichnet werden kann, ist insbesondere dann vorteilhaft, wenn die tatsächliche Lage des Abstandssensors und/oder der tatsächliche Boden von den Referenzannahmen, d.h. der Referenzlage und dem Referenzboden abweichen. Dies kann z.B. der Fall sein, wenn sich die Kontur des Bodens durch Unebenheiten langsam ändert oder - im Fall einer auf einem Fahrzeug montierten Sensorvorrichtung - wenn sich die Position der Sensorvorrichtung durch Zuladung und/oder Fahrzeugbewegungen verändert. Eine solche Abweichung von den Referenzannahmen soll nicht dazu führen, dass fälschlicherweise ein Objekt oder eine Bodenanomalie erkannt wird. D.h. die Abweichung von den Referenzannahmen soll nicht dazu führen, dass anhand der ermittelten Abstandsinformationen eine Abweichung von dem erwarteten Bodenbereich erkannt wird, obwohl kein Objekt bzw. Bodenanomalie in dem Überwachungsbereich vorhanden ist. Eine vorsorgliche Vergrößerung des erwarteten Bodenbereichs, die Fehldetektionen ebenfalls verhindern könnte, wird jedoch vermieden, da dies die Zuverlässigkeit der Erkennung verschlechtern würde (kleine Objekte werden nicht detektiert). Stattdessen kann anhand der aktuell ermittelten Abstandsinformationen festgestellt werden, ob der aktuell erwartete Bodenbereich zumindest in etwa zu den aktuell ermittelten Abstandsinformationen passt. Im Falle ungewöhnlicher Abweichungen, z.B. eine konstante Abweichung entlang des gesamten abgedeckten Bodenbereichs, kann eine Anpassung des erwarteten Bodenbereichs vorgenommen werden, die diese Abweichungen kompensiert. Eine Anpassung kann insbesondere in regelmäßigen zeitlichen Abständen, z.B. im Zuge eines jeweiligen Scans des Abstandssensors erfolgen. Auf diese Weise kann der erwarteter Bodenbereich also dynamisch und adaptiv angepasst werden, sodass sowohl stationäre als auch kurzzeitige Veränderungen der Sensorposition effizient kompensiert werden können und die Erkennungsleistung der Sensorvorrichtung nicht negativ beeinträchtigen.

Mittels des Abstandssensors können also wiederholt Abstandsinformationen ermittelt werden, wobei eine wiederholte Anpassung des erwarteten Bodenbereichs erfolgt, wobei jeweils anhand aktueller Abstandsinformationen die Anpassung des erwarteten Bodenbereichs vorgenommen wird. Im Zuge einer Anpassung des erwarteten Bodenbereichs kann auch eine Anpassung des vordefinierten Modells vorgenommen werden. Dies kann z.B. dann sinnvoll sein, wenn eine dauerhafte bzw. gleichbleibende Abweichung von den Referenzannahmen festgestellt wird und eine diesbezügliche wiederholte Anpassung des erwarteten Bodenbereichs vermieden werden soll, z.B. nach einer Inbetriebnahme der Sensorvorrichtung und einer damit verbundenen Initialisierung auf der Grundlage des vordefinierten Modells.

Die ermittelten Abstandinformationen können mehrere Abstandspunkte umfassen, wobei die Auswerteeinheit dazu ausgebildet ist, den erwarteten Bodenbereich in Abhängigkeit einer Untermenge der mehreren Abstandspunkte anzupassen, wobei die Untermenge der mehreren Abstandspunkte Abstandspunkte der ermittelten Abstandinformationen umfasst, die innerhalb des zumindest einen erwarteten Bodenbereichs liegen und/oder innerhalb eines Toleranzbereichs um eine Referenzabstandskontur des vordefinierten Modells liegen und/oder einen vordefinierten ersten Maximalabstand nicht überschreiten und/oder einen vordefinierten zweiten Maximalabstand zu einem benachbarten Abstandspunkt nicht überschreiten. Jedes dieser Auswahlkriterien ist dazu geeignet zu verhindern, dass der erwartete Bodenbereich auf der Grundlage von Abstandspunkten angepasst wird, die nicht valide sind. Eine Falschanpassung wird somit wirksam vermieden.

Für die Anpassung des erwarteten Bodenbereichs kann zunächst ein Pre-Processing erfolgen, bei welchem - wie vorstehend erläutert - nicht valide Abstandspunkte eliminiert werden. Anschließend kann ein Fitting des erwarteten Bodenbereichs (und auch des vordefinierten Modells) an die nach dem Pre-Processing verbleibenden Abstandspunkte erfolgen. Die Abstandspunkte können dabei als Stützstellen für den erwarteten Bodenbereich bzw. das vordefinierte Modell dienen. Die Anpassung des erwarteten Bodenbereichs erfolgt also während des Betriebs der Sensorvorrichtung, wobei bevorzugt jeweils eine Anpassung an einen aktuellen Scan (d.h. an die aktuellen Abstandinformationen) erfolgt. Ein jeweiliger erwarteter Bodenbereich beruht dabei auf dem jeweils vorangegangenen erwarteten Bodenbereich.

Die kontinuierliche Anpassung des erwarteten Bodenbereichs bzw. des vordefinierten Modells an die aktuellen Abstandinformationen ist besonders für Anwendungen im Innenbereich geeignet, da dort jeweils nur geringe (z.B. nicht sprunghafte) Veränderungen z.B. des tatsächlichen Bodens und damit der Abstandinformationen zu erwarten sind. Dementsprechend kann die Sensorvorrichtung vorteilhaft im Innenbereich eingesetzt sein, wobei der erwartete Bodenbereich besonders präzise an den tatsächlichen Boden angepasst werden kann, um die Erkennungsleistung der Sensorvorrichtung zu optimieren. Grundsätzlich kann die Sensorvorrichtung aber auch im Außenbereich eingesetzt werden, insbesondere in definierten Umgebungen.

Der Toleranzbereich kann beispielsweise eine Größe bzw. Breite von weniger als 5 cm, bevorzugt von weniger als 3 cm oder besonders bevorzugt von weniger als 1 cm aufweisen.

Kurz gesagt können also insbesondere der erwartete Bodenbereich und gegebenenfalls auch das (initiale) vordefinierte Modell im Betrieb kontinuierlich adaptiv angepasst werden. Durch die adaptive Anpassung des erwarteten Bodenbereichs wird eine besondere Robustheit gegen Bodenunebenheiten und z.B. gegen Nickbewegungen eines automatisierten Fahrzeugs erreicht. Durch die präzise Anpassung des erwarteten Bodenbereichs an einen tatsächlichen Boden können zudem auch sehr flache Objekte zuverlässig erkannt werden. Durch das vordefinierte Modell können hierbei unpräzise bzw. nicht valide erwartete Bodenbereiche sowie falsche Anpassungen des erwarteten Bodenbereichs zuverlässig vermieden werden.

Der Abstandssensor kann dazu angepasst sein, Abstandsinformationen für zwei bis sechs, vorzugsweise vier Überwachungsbereiche zu ermitteln, wobei jeder der Überwachungsbereiche einen, vorzugsweise jeweils unterschiedlichen, Bodenbereich abdeckt, und wobei die abgedeckten Bodenreiche vorzugsweise voneinander beabstandet sind. Der Abstandssensor kann somit als ein "Mehrlagenscanner" ausgebildet sein, wodurch eine zuverlässige Überwachung erreicht wird. Des Weiteren ist der Ausfall des Abstandssensors bezüglich eines einzelnen Überwachungsbereichs (z.B. einer Laserdiode) weniger kritisch. Darüber hinaus kann der Boden aufgrund der Abstände zwischen den abgedeckten Bodenbereichen stichprobenartig, d.h. besonders effizient erfasst werden. Gleichwohl ist es denkbar, aneinander angrenzende oder überlappende Bodenbereiche vorzusehen, um eine redundante Abdeckung des Bodens durch die Überwachungsbereiche zu verwirklichen.

Der Abstandssensor ist als Mehrlagenscanner ausgebildet, wozu er an einem drehbaren Scankopf mehrere zueinander verkippte Lasersensoren umfasst. Durch die verkippten Lasersensoren können von einem jeweiligen Lasersensor im Laufe einer vollständigen Drehung des Scankopfs Laserpulse ausgesandt werden, die zusammen die Form eines Kegels oder Kegelstumpfs bilden. Einer der Lasersensoren kann auch derart angeordnet sein, dass die im Laufe einer vollständigen Drehung des Scankopfs ausgesandten Laserpulse eine Ebene definieren.

Jeder Lasersensor kann dabei einen separaten Bodenbereich abdecken. Jeder separate Bodenbereich kann separat ausgewertet werden, um Objekte zu erkennen. Ferner ist es denkbar, dass für jeden separaten Bodenbereich ein separates vordefiniertes Modell existiert, auf welchem wiederum der erwartete Bodenbereich für den jeweiligen separaten Bodenbereich basiert. Wird zumindest in einem der separaten Bodenbereiche eine Abweichung von dem dort erwarteten Bodenbereich erkannt, wird ein Signal (insbesondere ein Warnsignal) ausgegeben. Alternativ ist es auch möglich, dass nur beim Erkennen einer Abweichung in zumindest zwei oder drei separaten Bodenbereichen ein Signal ausgegeben wird.

Die verschiedenen erwarteten Bodenbereiche bzw. vordefinierten Modelle für die separaten Bodenbereiche können jeweils unabhängig voneinander anhand der jeweils aktuellen Abstandsinformationen angepasst werden, wie oben genauer erläutert. Dies hat den Vorteil, dass die Anzahl der Überwachungsbereiche in Abhängigkeit des verwendeten Abstandsensors leicht variiert werden kann. Alternativ ist es denkbar, Informationen zwischen den Überwachungsbereichen bzw. Bodenbereichen auszutauschen, um eine robustere Erkennung zu ermöglichen. So können beispielsweise Plausibilitätschecks auf der Grundlage von Informationen mehrerer Überwachungsbereiche durchgeführt werden, insbesondere im Hinblick auf die Auswahl von Abstandspunkten, die zur Anpassung eines erwarteten Bodenbereichs herangezogen werden können, wie weiter oben beschrieben. Beispielsweise kann erst ein Signal ausgegeben werden, wenn in zumindest zwei oder drei Überwachungsbereichen ein Objekt oder eine Bodenanomalie erkannt wurde.

Nach einer weiteren Ausführungsform ist die Auswerteeinheit dazu angepasst, eine aktuelle Lage des Abstandssensors zu ermitteln. Auf der Grundlage der ermittelten Lage kann die Referenzlage des vordefinierten Modells initialisiert oder aktualisiert werden.

Vorzugsweise ist die Auswerteeinheit zur Auswertung der Abstandsinformation eine Recheneinrichtung des Abstandssensors. Dies bedeutet, dass die Datenverarbeitung des Abstandssensors ganz oder teilweise im Abstandssensor stattfinden kann. Dabei wird ausgenutzt, dass die Recheneinrichtung des Abstandssensors üblicherweise sehr leistungsfähig ist und darüber hinaus als sichere bzw. eigensichere Komponente ausgebildet sein kann. Die Recheneinrichtung des Abstandssensors kann dann zudem mit einer Steuereinheit kommunizieren, um beispielsweise ein Warnsignal bzw. allgemein ein Signal zu übermitteln.

Der Abstandssensor kann eigensicher ausgebildet sein und sichere Kommunikationsschnittstellen aufweisen.

Die Erfindung bezieht sicher ferner auf ein Fahrzeug mit einer optoelektronischen Sensorvorrichtung nach einem der vorstehend beschriebenen Ausführungsformen, und einer Steuereinheit, einer Auswerteeinheit, die ausgebildet ist, anhand der Abstandsinformationen eine Abweichung von zumindest einem erwarteten Bodenbereich zu erkennen, und bei Erkennung einer Abweichung ein Signal, insbesondere ein Warnsignal, an die Steuereinheit auszugeben.

Der Abstandssensor übermittelt die Abstandsinformationen an die Auswerteeinheit. Diese kann dann damit die Erkennung einer Abweichung von dem erwarteten Bodenbereich durchführen. Die Auswerteeinheit kommuniziert beispielsweise mit einer Steuereinheit und überträgt an die Steuereinheit ein Warnsignal, falls ein Objekt oder eine Bodenanomalie erkannt wurde. Die Steuereinheit kann dann auf das Warnsignal hin entsprechende Maßnahmen einleiten, z.B. den Stopp der Maschine bzw. des Fahrzeugs, ein Ausweichen des Fahrzeugs oder eine Warnung eines Benutzers durch optische oder akustische Signale. Grundsätzlich kann das Warnsignal derartige Aktionen auch direkt einleiten.

Nach einer Ausführungsform des Fahrzeugs ist die Auswerteeinheit dazu ausgebildet, das vordefinierte Modell an beschleunigungsabhängige Bewegungen des Fahrzeugs anzupassen. Hierbei kann z.B. die Anpassung des erwarteten Bodenbereichs in Abhängigkeit von aktuell ermittelten Abstandsinformationen dadurch verbessert werden, dass die Auswirkung der beschleunigungsbedingten Bewegung explizit berücksichtigt wird, z.B. durch den Zeitpunkt und/oder die Größe der Bewegung. Dies ist insbesondere dann sinnvoll, wenn das Fahrzeug selbstfahrend und die sichere Erkennungsleistung der Sensorvorrichtung besonders wichtig ist.

Eine Anwendung der Erfindung kann allgemein auch darin bestehen, die Beschaffenheit des Bodens zu erfassen. Auf der Grundlage der erfassten Bodenbeschaffenheit kann eine "Karte" für Fahrzeuge erstellt werden, die über eine andere Sensorik verfügen und aufgrund der Karte vorsorglich Bodenanomalien umfahren.

Merkmale, die in Zusammenhang mit den Ausführungsformen der Vorrichtungen offenbart sind, können entsprechend in dem Verfahren verwirklicht sein.

Die Erfindung wird nachfolgend rein beispielhaft anhand der Zeichnungen erläutert, in denen

Fig. 1    ein Fahrzeug mit einer optoelektronischen Sensorvorrichtung gemäß der Erfindung zeigt;

Fig. 2    eine schematische Darstellung einer auf einen Boden ausgerichteten optoelektronischen Sensorvorrichtung mit einem auf dem Boden angeordneten flachen Objekt zeigt;

Fig. 3    eine drehbare Sensorplatine mit vier Abstandssensoren zeigt;

Fig. 4    eine schematische Darstellung von vier erwarteten Bodenbereichen zeigt.

In den Zeichnungen sind identische oder ähnliche Teile mit denselben Bezugszeichen versehen.

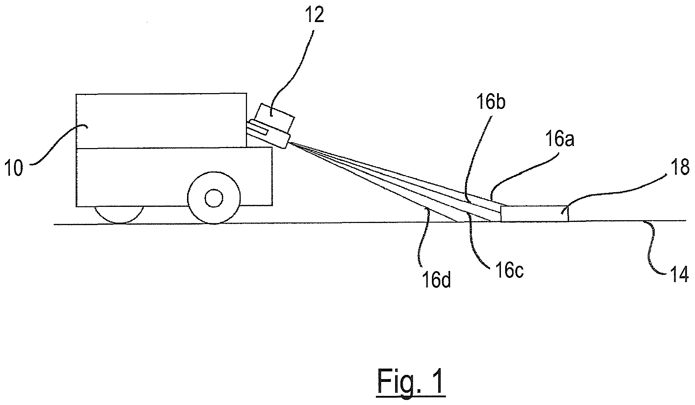

Ein Fahrzeug 10, das vorzugsweise selbstfahrend ist, weist eine optoelektronische Sensorvorrichtung 12 auf, die einen auf einen Boden 14 ausgerichteten Abstandssensor umfasst (Fig. 1). Der Abstandssensor (nicht gezeigt) ist vorzugsweise in die Sensorvorrichtung 12 integriert. Zur Verarbeitung und Steuerung der Sensorvorrichtung 12 ist eine Auswerteeinheit vorgesehen, die mit einer Steuerungseinheit des Fahrzeugs 10 verbunden ist (nicht gezeigt).

Der Abstandssensor der Sensorvorrichtung 12 ermittelt Abstandsinformationen für vier Überwachungsbereiche 16a, 16b, 16c, 16d, die jeweils einen Bereich des Bodens 14 abdecken. Die für jeden Überwachungsbereich 16a, 16b, 16c, 16d ermittelten Abstandsinformationen werden mit einem jeweiligen erwarteten Bodenbereich verglichen, wobei im Falle einer Abweichung ein Objekt und/oder eine Bodenanomalie erkannt wird. In Fig. 1 wird ein auf dem Boden 14 angeordnetes Objekt 18 von den Überwachungsbereichen 16a, 16b erfasst. Durch die hieraus resultierende Änderung der Abstandsinformationen (gemessener Abstand verkleinert) wird das vergleichsweise flache Objekt 18 zuverlässig erkannt.

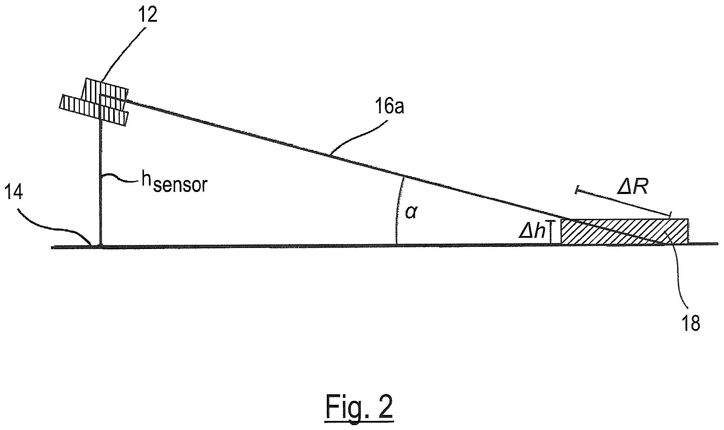

In Fig. 2 ist die Geometrie der Anordnung der Sensorvorrichtung 12 relativ zu dem Boden 14 verdeutlicht, wobei in Fig. 2 lediglich der Überwachungsbereich 16a dargestellt ist. Der Überwachungsbereich 16a besitzt einen Winkel $\alpha$ gegenüber dem Boden 14, der als klein angesehen werden kann. Hierdurch ist die durch das Objekt 18 hervorgerufene Abstandsänderung $\Delta R$ groß im Vergleich zu der geringen Höhe $\Delta h$ des Objekts 18. Das Objekt 18 kann daher trotz seiner geringen Höhe zuverlässig erkannt werden. Analytisch kann der Zusammenhang zwischen der Abstandsänderung und der Höhe des Objekts wie folgt angegeben werden:

$$\frac{dR}{dh} = \frac{1}{\sin \alpha}$$

Ferner kann der Einfluss einer Veränderung des Winkels $\alpha$ auf die Abstandsänderung wie folgt angegeben werden:

$$\frac{dR}{d\alpha} = \frac{-\cos \alpha}{\sin^2 \alpha} h_{sensor}$$

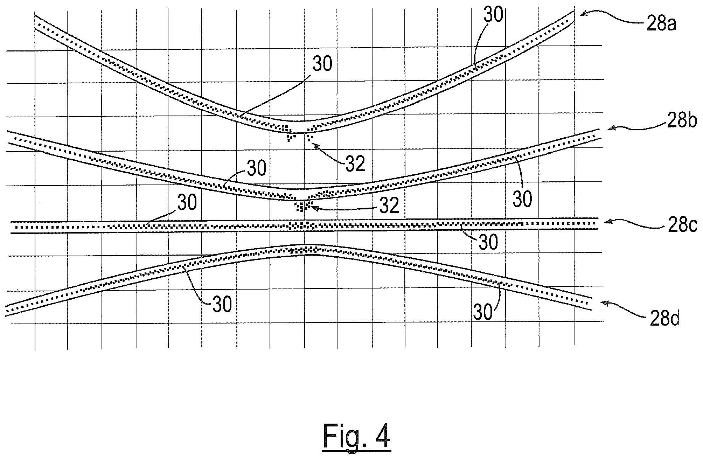

wobei $h_{sensor}$ die Anbauhöhe des Abstandssensors ist, d.h. die orthogonale Distanz zwischen dem Boden 14 und dem Abstandssensor, der in der Sensorvorrichtung 12 integriert ist. Auf der Grundlage der genannten Zusammenhänge kann ein optimaler Betriebsbereich der Sensorvorrichtung 12 bezüglich der im Prinzip frei wählbaren Parameter $h_{sensor}$ und $\alpha$ ermittelt werden, die eine Referenzlage des Abstandssensors relativ zu dem Boden 14 angeben. Der Boden 14 ist eine Ebene, die als Referenzboden fungiert. Anhand dieser Referenzdaten kann unter Berücksichtigung der von dem Abstandssensor abhängigen Überwachungsbereiche 16a, 16b, 16c, 16d analytisch ermittelt werden, wo die Überwachungsbereiche 16a, 16b, 16c, 16d den Boden 14 schneiden. Die entsprechenden Schnittkonturen stellen Referenzkonturen dar, die wie oben beschrieben zur Ermittlung von erwarteten Bodenbereichen herangezogen werden, wie etwa die erwarteten Bodenbereiche 28a, 28b, 28c, 28d von Fig. 4.

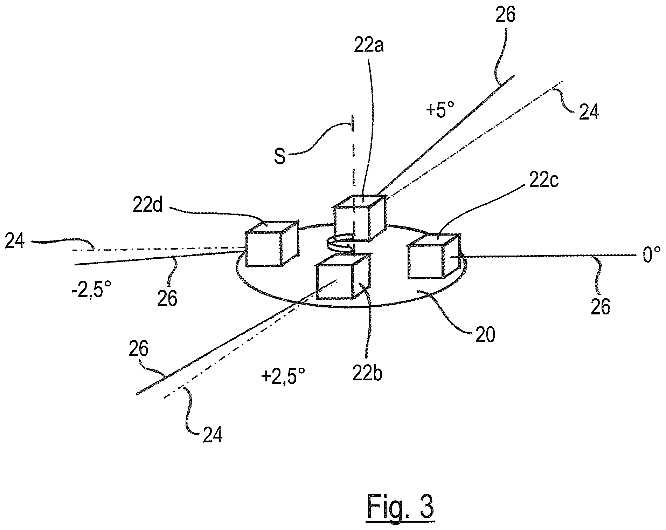

Fig. 3 zeigt eine Sensorplatine 20, die um eine Achse S drehbar gelagert und ein Sensorkopf des Abstandssensors der Sensorvorrichtung 12 ist. Auf der Sensorplatine 20 sind vier Lasersensoren 22a, 22b, 22c, 22d angeordnet. Der Abstandssensor kann daher auch als Laserscanner bezeichnet werden. Jeder der Lasersensoren 22a, 22b, 22c, 22d misst Abstände durch Laserstrahlen 26, die relativ zur Sensorplatine 20 in einem jeweils individuellen Winkel verkippt sind. Zur Verdeutlichung des jeweiligen Verkippungswinkels sind in Fig. 3 Hilfslinien 24 eingezeichnet, die parallel zu der Ebene der Sensorplatine 20 sind. Die Verkippungswinkel der Lasersensoren 22a, 22b, 22c, 22d betragen +5, +2,5, 0 und -2,5 Grad. Die Sensorplatine 20 ist bei Einsatz in der Sensorvorrichtung 12 von Fig. 1 und Fig. 2 um den Winkel $\alpha$ relativ zu dem Boden 14 geneigt, um die Überwachungsbereiche 16a, 16b, 16c, 16d zu bilden (Fig. 1). Es versteht sich, dass auch andere Abstandssensoren mit anderen Überwachungsbereichen vorgesehen werden können.

In Fig. 4 sind vier separate erwartete Bodenbereiche 28a, 28b, 28c, 28d dargestellt, die mit den Bodenbereichen korrespondieren, welche durch die Überwachungsbereiche 16a, 16b, 16c, 16d abgedeckt werden, wenn die Sensorplatine 20 von Fig. 3 gedreht wird und sich kein Objekt in den Überwachungsbereichen 16a, 16b, 16c, 16d befindet. Fig. 4 stellt somit eine Draufsicht auf den Boden 14 dar (Perspektive senkrecht auf die Bodenebene), wobei die erwarteten Bodenbereiche 28a, 28b, 28c, 28d markiert sind. Im Zuge einer Drehung der Sensorplatine 20 werden durch fortlaufend periodische Laserpulsmessungen mittels der Lasersensoren 22a, 22b, 22c, 22d Abstandspunkte 30, 32 ermittelt. Sofern die Abstandspunkte 30 innerhalb der erwarteten Bodenbereiche 28a, 28b, 28c, 28d liegen, kann davon ausgegangen werden, dass die zur Messung der Abstandspunkte 30 ausgesandten Laserpulse ungehindert auf den Boden 14 getroffen sind (d.h. es befindet sich kein Objekt in den Überwachungsbereichen 16a, 16b, 16c, 16d) und der Boden 14 keine Bodenanomalie (z.B. eine Vertiefung) aufweist. Sofern jedoch Abstandspunkte 32 gemessen werden, die außerhalb der erwarteten Bodenbereiche 28a, 28b, 28c, 28d (bzw. außerhalb deren Toleranzbereichen) liegen, kann davon ausgegangen werden, dass sich ein Objekt oder eine Bodenanomalie in den Überwachungsbereichen 16a, 16b, 16c, 16d befindet, d.h. die Abstandspunkte 32 werden nicht dem Boden 14 zugeordnet. Je nachdem ob ein betreffender erwarteter Bodenbereich 28a, 28b, 28c, 28d über- oder unterschritten wird, kann zwischen einem Objekt und einer Vertiefung im Boden 14 unterschieden werden. In Fig. 4 unterschreiten die Abstandspunkte 32 die erwarteten Bodenbereiche 28a und 28b. Dies korrespondiert mit Fig. 1, in der das Objekt 18 von den Überwachungsbereichen 16a und 16b erfasst wird und die auf dem Objekt 18 liegenden Abstandspunkte 32 verkleinerte Abstände zur Sensorvorrichtung 12 aufweisen, die außerhalb der erwarteten Bodenbereiche 28a und 28b liegen.

Bezugszeichenliste

| 10 | Fahrzeug |
|----|----------|
| 12 | Sensorvorrichtung |
| 14 | Boden |
| 16a, 16b | Überwachungsbereich |
| 16c, 16d | Überwachungsbereich |
| 18 | Objekt |
| 20 | Sensorplatine |
| 22a, 22b | Lasersensor |

22c, 22d      Lasersensor
24      Hilfslinie
26      Laserstrahl
28a, 28b      erwarteter Bodenbereich
28c, 28d      erwarteter Bodenbereich
30      Abstandspunkte
32      Abstandspunkte

S      Achse

**Patentansprüche**

1. Optoelektronische Sensorvorrichtung (12) mit einem auf einen Boden (14) ausgerichteten Abstandssensor, welchei Abstandsinformationen für zumindest einen Überwachungsbereich (16a, 16b, 16c, 16d) ermittelt, wobei der zumindest eine Überwachungsbereich (16a, 16b, 16c, 16d) einen Bodenbereich abdeckt, der einen Oberflächenbereich des Bodens (14) bildet,
einer Auswerteeinheit, die ausgebildet ist, anhand der Abstandsinformationen eine Abweichung von zumindest einem erwarteten Bodenbereich (28a, 28b, 28c, 28d) zu erkennen, und bei Erkennung einer Abweichung ein Signal, insbesondere Warnsignal, auszugeben;
**dadurch gekennzeichnet , dass**
der zumindest eine erwartete Bodenbereich (28a, 28b, 28c, 28d) auf einem vordefinierten Modell beruht, welches die Abstandsinformationen für den zumindest einen Überwachungsbereich (16a, 16b, 16c, 16d) für den theoretischen Fall repräsentiert, in dem sich der Abstandssensor in einer bekannten Referenzlage befindet und auf einen bekannten Referenzboden ausgerichtet ist;
wobei der Abstandssensor als Mehrlagen-Laserscanner mit einem Scankopf ausgebildet ist, der um eine gegenüber dem Boden um einen Winkel ($\alpha$) geneigte Achse (S) drehbar ist und der mehrere zueinander verkippte Lasersensoren (22a, 22b, 22c, 22d) umfasst, von denen zumindest einer einen Überwachungsbereich mit einem räumlich gekrümmten Verlauf aufweist.

2. Optoelektronische Sensorvorrichtung nach Anspruch 1,
wobei das Modell ein geometrisches Modell ist, das nicht von Abstandsinformationen abhängig ist, die von dem Abstandssensor in einem tatsächlichen Betrieb der optoelektronischen Sensorvorrichtung (12) ermittelt werden.

3. Optoelektronische Sensorvorrichtung nach Anspruch 1 oder 2,
wobei der zumindest eine Überwachungsbereich (16a, 16b, 16c, 16d) und der Boden einen Winkel $\alpha$ einschließen, der kleiner vierzig, vorzugsweise kleiner dreißig Grad ist.

4. Optoelektronische Sensorvorrichtung nach einem der vorstehenden Ansprüche,
wobei das Modell zumindest eine Referenzabstandskontur umfasst, die auf der Referenzlage und dem Referenzboden beruht,
und wobei der zumindest eine erwartete Bodenbereich (28a, 28b, 28c, 28d) einen Toleranzbereich um die zumindest eine Referenzabstandskontur bildet.

5. Optoelektronische Sensorvorrichtung nach Anspruch 4,
wobei der zumindest eine Überwachungsbereich eine gekrümmte Fläche umfasst, die sich zumindest teilweise mit dem Referenzboden schneidet, wobei die Schnittlinie zwischen der Fläche und dem Referenzboden die zumindest eine Referenzabstandskontur bildet.

6. Optoelektronische Sensorvorrichtung nach einem der vorstehenden Ansprüche,
wobei die Auswerteeinheit dazu ausgebildet ist, den zumindest einen erwarteten Bodenbereich auf der Grundlage des vordefinierten Modells zu bestimmen.

7. Optoelektronische Sensorvorrichtung nach einem der vorstehenden Ansprüche,
wobei die Auswerteeinheit dazu ausgebildet ist, den zumindest einen erwarteten Bodenbereich (28a, 28b, 28c, 28d) in Abhängigkeit von aktuell ermittelten Abstandsinformationen anzupassen.

8. Optoelektronische Sensorvorrichtung nach Anspruch 7,
wobei die ermittelten Abstandsinformationen mehrere Abstandspunkte (30, 32) umfassen, wobei die Auswerteeinheit dazu ausgebildet ist, den erwarteten Bodenbereich (28a, 28b, 28c, 28d) in Abhängigkeit einer Untermenge der mehreren Abstandspunkte anzupassen, wobei die Untermenge der mehreren Abstandspunkte Abstandspunkte (30, 32) der ermittelten Abstandsinformationen umfasst, die

     - innerhalb des zumindest einen erwarteten Bodenbereichs (28a, 28b, 28c, 28d) liegen und/oder
     - innerhalb eines Toleranzbereichs um eine Referenzabstandskontur des vordefinierten Modells liegen und/oder
     - einen vordefinierten ersten Maximalabstand nicht überschreiten und/oder
     - einen vordefinierten zweiten Maximalabstand zu einem benachbarten Abstandspunkt nicht überschreiten.

9. Optoelektronische Sensorvorrichtung nach einem der vorstehenden Ansprüche, wobei der Abstandssensor Abstandsinformationen für zwei bis sechs, vorzugsweise vier Überwachungsbereiche (16a, 16b, 16c, 16d) ermittelt, wobei jeder der Überwachungsbereiche (16a, 16b, 16c, 16d) jeweils einen Bodenbereich abdeckt, der einen Oberflächenbereich des Bodens (14) bildet, wobei die abgedeckten Bodenreiche vorzugsweise voneinander beabstandet sind.

10. Optoelektronische Sensorvorrichtung nach einem der vorstehenden Ansprüche, wobei die Auswerteeinheit dazu angepasst ist, eine Lage des Abstandssensors zu ermitteln.

11. Optoelektronische Sensorvorrichtung nach einem der vorstehenden Ansprüche, wobei die Auswerteeinheit eine Recheneinrichtung des Abstandssensors ist, wobei eine Datenverarbeitung des Abstandssensors vollständig oder teilweise im Abstandssensor stattfindet.

12. Fahrzeug (12) mit einer optoelektronischen Sensorvorrichtung (12) nach einem der vorstehenden Ansprüche, und einer Steuereinheit, einer Auswerteeinheit, die ausgebildet ist, anhand der Abstandsinformationen eine Abweichung von zumindest einem erwarteten Bodenbereich (28a, 28b, 28c, 28d) zu erkennen, und bei Erkennung einer Abweichung ein Signal, insbesondere Warnsignal, an die Steuereinheit auszugeben.

13. Fahrzeug (12) nach Anspruch 12, wobei die Auswerteeinheit ausgebildet ist, das vordefinierte Modell an beschleunigungsabhängige Bewegungen des Fahrzeugs (12) anzupassen.

14. Fahrzeug (12) nach Anspruch 9 oder 10, wobei das Fahrzeug (12) selbstfahrend ist.

15. Verfahren zum Betrieb einer optoelektronischen Sensorvorrichtung (12), bei welcher mit einem auf einen Boden (14) ausgerichteten Abstandssensor Abstandsinformationen für zumindest einen Überwachungsbereich (16a, 16b, 16c, 16d) ermittelt werden, wobei der zumindest eine Überwachungsbereich (16a, 16b, 16c, 16d) einen Bodenbereich abdeckt, der einen Oberflächenbereich des Bodens (14) bildet, mit einer Auswerteeinheit anhand der Abstandsinformatiönen eine Abweichung von zumindest einem erwarteten Bodenbereich (28a, 28b, 28c, 28d) erkannt wird, und bei Erkennung einer Abweichung ein Signal, insbesondere Warnsignal, ausgegeben wird, **dadurch gekennzeichnet , dass** der zumindest eine erwartete Bodenbereich (28a, 28b, 28c, 28d) auf einem vordefinierten Modell beruht, welches die Abstandsinformationen für den zumindest einen Überwachungsbereich (16a, 16b, 16c, 16d) für den Fall repräsentiert, dass sich der Abstandssensor in einer bekannten Referenzlage befindet und auf einen bekannten Referenzboden ausgerichtet ist; wobei der Abstandssensor als Mehrlagen-Laserscanner mit einem Scankopf ausgebildet ist, der um eine gegenüber dem Boden um einen Winkel ($\alpha$) geneigte Achse (S) drehbar ist und der mehrere zueinander verkippte Lasersensoren (22a, 22b, 22c, 22d) umfasst, von denen zumindest einer einen Überwachungsbereich mit einem räumlich gekrümmten Verlauf aufweist.

**Claims**

1. An optoelectronic sensor apparatus (12) comprising a distance sensor which is aligned with a ground (14) and which determines distance information for at least one monitored zone (16a, 16b, 16c, 16d), wherein the at least one monitored zone (16a, 16b, 16c, 16d) covers a ground region which forms a surface region of the ground (14); and an evaluation unit which is configured to recognize a deviation from at least one expected ground region (28a, 28b, 28c, 28d) on the basis of the distance information and to output a signal, in particular a warning signal, on the recognition of a deviation, **characterized in that** the at least one expected ground region (28a, 28b, 28c, 28d) is based on a predefined model which represents the distance information for the at least one monitored zone (16a, 16b, 16c, 16d) for the theoretical case in which the distance sensor is located in a known reference position and is aligned with a known reference ground, wherein the distance sensor is configured as a multilayer laser scanner having a scanning head which is rotatable about an axis (S) inclined by an angle ($\alpha$) with respect to the ground and which comprises a plurality of laser sensors (22a, 22b, 22c, 22d) which are tilted with respect to one another and of which at least one has a monitored zone having a spatially curved extent.

2. An optoelectronic sensor apparatus in accordance with claim 1, wherein the model is a geometric model which is not dependent on distance information which is determined by the distance sensor in an actual operation of the optoelectronic sensor apparatus (12).

3. An optoelectronic sensor apparatus in accordance with claim 1 or claim 2, wherein the at least one monitored zone (16a, 16b, 16c, 16d) and the ground in-

clude an angle $\alpha$ which is less than forty degrees, preferably less than thirty degrees.

4. An optoelectronic sensor apparatus in accordance with any one of the preceding claims,
wherein the model comprises at least one reference distance contour which is based on the reference position and on the reference ground; and wherein the at least one expected ground region (28a, 28b, 28c, 28d) forms a tolerance range around the at least one reference distance contour.

5. An optoelectronic sensor apparatus in accordance with claim 4,
wherein the at least one monitored zone comprises a curved surface which at least partly intersects with the reference ground, with the intersection line between the surface and the reference ground forming the at least one reference distance contour.

6. An optoelectronic sensor apparatus in accordance with any one of the preceding claims,
wherein the evaluation unit is configured to determine the at least one expected ground region on the basis of the predefined model.

7. An optoelectronic sensor apparatus in accordance with any one of the preceding claims,
wherein the evaluation unit is configured to adapt the at least one expected ground region (28a, 28b, 28c, 28d) in dependence on currently determined distance information.

8. An optoelectronic sensor apparatus in accordance with claim 7,
wherein the determined distance information comprises a plurality of distance points (30, 32); wherein the evaluation unit is configured to adapt the expected ground region (28a, 28b, 28c, 28d) in dependence on a subset of the plurality of distance points; and wherein the subset of the plurality of distance points comprise distance points (30, 32) of the determined distance information which

- lie within the at least one expected ground region (28a, 28b, 28c, 28d)
and/or
- lie within a tolerance range around a reference distance contour of the predefined model
and/or
- do not exceed a predefined first maximum distance
and/or
- do not exceed a predefined second maximum distance from an adjacent distance point.

9. An optoelectronic sensor apparatus in accordance with any one of the preceding claims,

wherein the distance sensor determines distance information for two to six, preferably four, monitored zones (16a, 16b, 16c, 16d); wherein each of the monitored zones (16a, 16b, 16c, 16d) covers a respective ground region which forms a surface region of the ground (14); and wherein the covered ground regions are preferably spaced apart from one another.

10. An optoelectronic sensor apparatus in accordance with any one of the preceding claims,
wherein the evaluation unit is adapted to determine a position of the distance sensor.

11. An optoelectronic sensor apparatus in accordance with any one of the preceding claims,
wherein the evaluation unit is a processing device of the distance sensor, with a data processing of the distance sensor taking place completely or partly in the distance sensor.

12. A vehicle (12) comprising
an optoelectronic sensor device (12) in accordance with any one of the preceding claims;
a control unit; and
an evaluation unit which is configured to recognize a deviation from at least one expected ground region (28a, 28b, 28c, 28d) on the basis of the distance information and to output a signal, in particular a warning signal, to the control unit on the recognition of a deviation.

13. A vehicle (12) in accordance with claim 12,
wherein the evaluation unit is configured to adapt the predefined model to movements of the vehicle (12) which are dependent on acceleration.

14. A vehicle (12) in accordance with claim 9 or claim 10,
wherein the vehicle (12) is a self-driving vehicle.

15. A method of operating an optoelectronic sensor apparatus (12) in which
distance information for at least one monitored zone (16a, 16b, 16c, 16d) is determined by a distance sensor aligned with a ground (14), wherein the at least one monitored zone (16a, 16b, 16c, 16d) covers a ground region which forms a surface region of the ground (14); and
a deviation from at least one expected ground region (28a, 28b, 28c, 28d) is recognized by an evaluation unit on the basis of the distance information and a signal, in particular a warning signal, is output on the recognition of a deviation,
**characterized in that**
the at least one expected ground region (28a, 28b, 28c, 28d) is based on a predefined model which represents the distance information for the at least one monitored zone (16a, 16b, 16c, 16d) for the case that the distance sensor is located in a known reference position and is aligned with a known reference ground,

wherein the distance sensor is configured as a multi-layer laser scanner having a scanning head which is rotatable about an axis (S) inclined by an angle ($\alpha$) with respect to the ground and which comprises a plurality of laser sensors (22a, 22b, 22c, 22d) which are tilted with respect to one another and of which at least one has a monitored zone having a spatially curved extent.

## Revendications

1. Dispositif capteur optoélectronique (12) comportant un capteur de distance orienté vers un sol (14), qui détermine des informations de distance pour au moins une zone à surveiller (16a, 16b, 16c, 16d), ladite au moins une zone à surveiller (16a, 16b, 16c, 16d) recouvrant une zone de sol qui constitue une zone de surface du sol (14),

   une unité d'évaluation réalisée pour reconnaître, sur la base des informations de distance, une déviation par rapport à au moins une zone de sol attendue (28a, 28b, 28c, 28d), et pour émettre un signal, en particulier un signal d'avertissement, lorsqu'une déviation est reconnue ;

   **caractérisé en ce que**

   ladite au moins une zone de sol attendue (28a, 28b, 28c, 28d) est basée sur un modèle prédéfini qui représente les informations de distance pour ladite au moins une zone à surveiller (16a, 16b, 16c, 16d) pour le cas théorique dans lequel le capteur de distance se situe dans une position de référence connue et est orienté vers un sol de référence connu ;

   le capteur de distance étant réalisé sous forme de scanner laser multi-couche ayant une tête de scannage pouvant tourner autour d'un axe (S) incliné d'un angle ($\alpha$) par rapport au sol et comprenant plusieurs capteurs lasers (22a, 22b, 22c, 22d) basculés les uns par rapport aux autres, dont l'un au moins comprend une zone à surveiller ayant une extension spatialement incurvée.

2. Dispositif capteur optoélectronique selon la revendication 1,

   dans lequel le modèle est un modèle géométrique qui ne dépend pas des informations de distance déterminées par le capteur de distance lors un fonctionnement réel du dispositif capteur optoélectronique (12).

3. Dispositif capteur optoélectronique selon la revendication 1 ou 2,

   dans lequel ladite au moins une zone à surveiller (16a, 16b, 16c, 16d) et le sol définissent un angle $\alpha$ qui est inférieur à quarante, de préférence inférieur à trente degrés.

4. Dispositif capteur optoélectronique selon l'une des revendications précédentes,

   dans lequel le modèle comprend au moins un contour de distance de référence basé sur la position de référence et sur le sol de référence, et ladite au moins une zone de sol attendue (28a, 28b, 28c, 28d) forme une plage de tolérance autour dudit au moins un contour de distance de référence.

5. Dispositif capteur optoélectronique selon la revendication 4,

   dans lequel ladite au moins une zone à surveiller présente une surface incurvée qui coupe au moins partiellement le sol de référence, la ligne d'intersection entre la surface et le sol de référence constituant ledit au moins un contour de distance de référence.

6. Dispositif capteur optoélectronique selon l'une des revendications précédentes,

   dans lequel l'unité d'évaluation est réalisée pour définir ladite au moins une zone de sol attendue sur la base du modèle prédéfini.

7. Dispositif capteur optoélectronique selon l'une des revendications précédentes,

   dans lequel l'unité d'évaluation est réalisée pour adapter ladite au moins une zone de sol attendue (28a, 28b, 28c, 28d) en fonction des informations de distance actuellement déterminées.

8. Dispositif capteur optoélectronique selon la revendication 7,

   dans lequel les informations de distance déterminées incluent plusieurs points de distance (30, 32), l'unité d'évaluation étant réalisée pour adapter la zone de sol attendue (28a, 28b, 28c, 28d) en fonction d'un sous-ensemble desdits plusieurs points de distance, le sous-ensemble desdits plusieurs points de distance incluant des points de distance (30, 32) des informations de distance déterminées qui

   - se situent à l'intérieur de ladite au moins une zone de sol attendue (28a, 28b, 28c, 28d) et/ou
   - se situent à l'intérieur d'une plage de tolérance autour d'un contour de distance de référence du modèle prédéfini, et/ou
   - ne dépassent pas une première distance maximale prédéfinie, et/ou
   - ne dépassent pas une seconde distance maximale prédéfinie par rapport à un point de distance voisin.

9. Dispositif capteur optoélectronique selon l'une des revendications précédentes,

   dans lequel le capteur de distance détermine des informations de distance pour deux à six, de préférence quatre, zones à surveiller (16a, 16b, 16c, 16d), chacune des zones à surveiller (16a, 16b, 16c, 16d) recouvrant une zone de sol respective qui constitue une zone de surface du sol(14), les zones de sol recouvertes étant de préférence espacées les unes des autres.

10. Dispositif de capteur optoélectronique selon l'une des revendications précédentes,
dans lequel l'unité d'évaluation est adaptée pour déterminer une position du capteur de distance.

11. Dispositif capteur optoélectronique selon l'une des revendications précédentes,
dans lequel l'unité d'évaluation est un dispositif de calcul du capteur de distance, le traitement des données du capteur de distance ayant lieu entièrement ou partiellement dans le capteur de distance.

12. Véhicule (12) comportant
un dispositif capteur optoélectronique (12) selon l'une des revendications précédentes, et
une unité de commande,
une unité d'évaluation réalisée pour reconnaître, sur la base des informations de distance, une déviation par rapport à au moins une zone de sol attendue (28a, 28b, 28c, 28d), et pour émettre un signal, en particulier un signal d'avertissement, à l'unité de commande lorsqu'une déviation est reconnue.

13. Véhicule (12) selon la revendication 12,
dans lequel l'unité d'évaluation est réalisée pour adapter le modèle prédéfini aux mouvements du véhicule (12) qui dépendent de l'accélération.

14. Véhicule (12) selon la revendication 9 ou 10,
dans lequel le véhicule (12) est automoteur.

15. Procédé de fonctionnement d'un dispositif capteur optoélectronique (12), dans lequel
des informations de distance pour au moins une zone à surveiller (16a, 16b, 16c, 16d) sont déterminées à l'aide d'un capteur de distance orienté vers un sol (14), ladite au moins une zone à surveiller (16a, 16b, 16c, 16d) recouvrant une zone de sol qui constitue une zone de surface du sol (14),
une déviation par rapport à au moins une zone de sol attendue (28a, 28b, 28c, 28d) est reconnue sur la base des informations de distance à l'aide d'une unité d'évaluation, et un signal, en particulier un signal d'avertissement, est émis lorsqu'une déviation est reconnue ;
**caractérisé en ce que**
ladite au moins une zone de sol attendue (28a, 28b, 28c, 28d) est basée sur un modèle prédéfini qui représente les informations de distance pour ladite au moins une zone à surveiller (16a, 16b, 16c, 16d) pour le cas théorique dans lequel le capteur de distance se situe dans une position de référence connue et est orienté vers un sol de référence connu ;
le capteur de distance étant réalisé sous forme de scanner laser multi-couche ayant une tête de scannage pouvant tourner autour d'un axe (S) incliné d'un angle ($\alpha$) par rapport au sol et comprenant plusieurs capteurs lasers (22a, 22b, 22c, 22d) basculés les uns par rapport aux autres, dont l'un au moins comprend une zone à surveiller ayant une extension spatialement incurvée.

EP 3 521 860 B1

Fig. 1

EP 3 521 860 B1

Fig. 2

Fig. 3

EP 3 521 860 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7741961 B1
- DE 102013207147 A1
- EP 2192384 A1